Europäisches Patentamt

(19) European Patent Office

Office européen des brevets

(11) Veröffentlichungsnummer: **0 167 158**
**A2**

(12) **EUROPÄISCHE PATENTANMELDUNG**

(21) Anmeldenummer: 85108237.0

(22) Anmeldetag: 03.07.85

(51) Int. Cl.⁴: **H 02 P 5/40**
**H 02 K 21/04**

(30) Priorität: 03.07.84 DE 3424402

(43) Veröffentlichungstag der Anmeldung:
08.01.86 Patentblatt 86/2

(84) Benannte Vertragsstaaten:
AT BE CH DE FR GB IT LI LU NL SE

(71) Anmelder: Fleckenstein, Volker Dipl.-Ing.
Hermann-Strebel-Strasse 48
D-8500 Nürnberg(DE)

(72) Erfinder: Fleckenstein, Volker Dipl.-Ing.
Hermann-Strebel-Strasse 48
D-8500 Nürnberg(DE)

(74) Vertreter: Patentanwälte Czowalla . Matschkur +
Partner
Dr.-Kurt-Schumacher-Strasse 23 Postfach 9109
D-8500 Nürnberg 11(DE)

(54) Drehzahlgeregelte elektrische Antriebsvorrichtung mit Feldschwächbereich.

㊼ Drehzahlgeregelte elektrische Antriebsvorrichtung mit einer stromrichtergespeisten, selbstgesteuerten, läufererregten Synchronmaschine mit Permanenterregung mit einer parallel zur Permanenterregung angeordneten, als Gegenerregung zur Permanenterregung schaltbaren elektrischen Erregung.

Fig. 4

Drehzahlgeregelte elektrische Antriebsvorrichtung mit
Feldschwächbereich

Die Erfindung bezieht sich auf eine drehzahlgeregelte elektrische Antriebsvorrichtung mit einer stromrichtergespeisten,
selbstgesteuerten, läufererregten Synchronmaschine mit Permanenterregung.

Für Antriebe mit genauen, schnellen Drehzahlregelungen werden
heute fast ausschließlich fremderregte Gleichstrommaschinen
eingesetzt. Die Speisung der Gleichstrommaschine erfolgt über
netzgeführte Umkehrstromrichter. Beispiele für derartige Antriebssysteme sind Hauptspindelantriebe für Werkzeugmaschinen.

Vor allem bei Antrieben mit Werkzeugmaschinen besteht die Forderung, in einem möglichst großen Drehzahlbereich konstante
Leistung an der Motorwelle abnehmen zu können. Wirtschaftlich
ist diese Forderung nur dadurch zu realisieren, daß die Gleichstrommaschine im Feldschwächbereich betrieben wird.

Derartige fremderregte Gleichstrommaschinen mit Speisung über
netzgeführte Stromrichter weisen jedoch erhebliche Nachteile
auf:

Aufgrund des für die Kommutierung notwendigen Kollektors und der Kohlebürsten sind Gleichstrommaschinen nicht wartungsfrei.

Kollektor und Kohlebürsten sind empfindlich bei Überströmen.

Durch den Kollektor ist die Maximaldrehzahl der Maschine begrenzt.

Da der größte Teil der Motorverluste im Läufer entsteht, müssen die Maschinen bei wirtschaftlichen Baugrößen durchzugsbelüftet ausgeführt werden; hohe Schutzarten sind nur mit erheblichem Aufwand realisierbar.

Bei der Speisung über netzgeführte Stromrichter ist vor allem die Steifigkeit und die Dynamik des Antriebs bei Drehzahlen nahe 0 begrenzt.

Zwar lassen sich die Nachteile des Kollektors mit umrichtergesteuerten Drehfeldmaschinen, im allgemeinen Asynchronmotoren, beseitigen, doch ist auf der anderen Seite der Aufwand derartiger Antriebssysteme für die Steuerung und Regelung sehr groß, wenn die Regeleigenschaften hochwertiger Gleichstromantriebe erreicht werden sollen. Dieser hohe Steuer- und Regelaufwand wird noch um ein Vielfaches größer, wenn der Antrieb bei Drehzahl 0 bereits mit voller Dynamik betrieben werden muß. Hinzu kommt schließlich noch, daß auch bei Asynchronantrieben die Hauptverluste im Läufer entstehen, d.h. in diesem Punkt der gleiche Nachteil gegeben ist wie bei Gleichstrommaschinen.

Kollektorlose Gleichstrommaschinen mit elektronischer Kommutierung und Steuerung über einen Polradlagegeber vermeiden die bei der oben beschriebenen Nachteile der Gleichstrommaschinen, wobei derartige Antriebe mit permanent erregten Läufern als sog. Servoantriebe bekannt sind. Einem wirtschaftlichen Einsatz dieser Art von kollektorlosen Gleichstrommaschinen, z.B. als Hauptspindelantriebe in Werkzeugmaschinen, steht aber entgegen, daß ein Feldschwächbereich nicht möglich ist.

Der Erfindung liegt daher die Aufgabe zugrunde, eine drehzahlgeregelte elektrische Antriebsvorrichtung der eingangs genannten Art so auszugestalten, daß sie die Vorteile schleiferloser Synchronmaschinen mit den günstigen Betriebsbedingungen von Antriebsmaschinen mit Feldschwächbereich vereinigen können.

Zur Lösung dieser Aufgabe ist erfindungsgemäß eine parallel zur Permanenterregung angeordnete, als Gegenerregung zur Permanenterregung schaltbare elektrische Erregung vorgesehen.

Diese zusätzliche elektrische Erregung, die wegen der notwendigen Feststellung der Läuferstellung durch Polabtastung stets exakt parallel zur Permanenterregung wirken muß, damit sich bei Änderung der elektrischen Erregung nicht die Winkellage des Magnetpols mitverschiebt, ermöglicht den Betrieb einer Synchronmaschine mit Feldschwächbereich, wobei ein derartiger Antrieb mindestens die gleichen günstigen Betriebseigenschaften wie ein hochwertiger Gleichstromantrieb aufweist. Gegenüber einem Gleichstromantrieb können jedoch zusätzlich - durch berührungsfreie Übertragung der elektrischen Erregung - die Vorteile einer kollektor- und bürstenlosen Maschine voll genutzt werden.

Bei Drehzahlen nahe 0 ist die erfindungsgemäße Antriebsvorrichtung einem Gleichstromantrieb an Steifigkeit überlegen.

Durch die Möglichkeit, die Antriebsvorrichtung auch im Feldschwächbereich betreiben zu können - für Spezialanwendungsfälle kann die elektrische Erregung auch so gestaltet sein, daß sie in Verstärkung zur Permanenterregung arbeitet - ergibt sich ein wirtschaftliches Antriebssystem.

Gegenüber umrichtergespeisten Drehfeldmaschinen besteht der besondere Vorteil der erfindungsgemäßen Antriebsvorrichtung darin, daß Aufwand und Struktur der Steuerung und Regelung besonders einfach sind, da das Feld der Maschine und der Ständerstrom getrennt und anabhängig voneinander einstellbar sind.

Die elektrische Erregung kann dabei so ausgelegt sein, daß sie erst bei Drehzahlen $>$ 0 zugeschaltet wird, was am einfachsten durch eine mit Gleichstrom erregte Hilfseinrichtung zur Übertragung und Regelung der elektrischen Erregung der Synchronmaschine realisiert wird. Das Zuschalten der im Sinne einer Feldschwächung wirksamen elektrischen Erregung kann dabei bei beliebigen Nenndrehzahlen erfolgen, von denen ab eine Feldschwächung zur Erzielung eines wirtschaftlichen Antriebssystems stattfinden soll.

Alternativ kann auch eine permanenterregte Hilfseinrichtung zur Übertragung und Regelung der elektrischen Erregung der Synchronmaschine vorgesehen sein, was zur Folge hat, daß bereits ab der Drehzahl 0 zusätzlich zur Permanenterregung die erfindungsgemäß als Gegenerregung geschaltete elektrische Erregung wirksam wird.

Schließlich liegt es auch noch im Rahmen der Erfindung, eine in Abhängigkeit von der Klemmenspannung des Motors oder dessen Drehzahl arbeitende Regeleinrichtung für die elektrische Erregung der Synchronmaschine vorzusehen.

Weitere Vorteile, Merkmale und Einzelheiten der Erfindung ergeben sich aus der nachfolgenden Beschreibung einiger Ausführungsbeispiele sowie anhand der Zeichnung. Dabei zeigen:

Fig. 1  ein Diagramm zur Darstellung der Betriebsweise eines
        Gleichstromantriebs mit Feldschwächbereich,

Fig. 2  den prinzipiellen Aufbau einer erfindungsgemäßen Erregereinrichtung  als Schnitt durch eine Synchronmaschine,

Fig. 3  einen Längsschnitt durch eine Synchronmaschine mit einer
        erfindungsgemäßen elektrischen Erregereinrichtung,

Fig.4   den prinzipiellen Aufbau eines erfindungsgemäß ausgestalteten Hauptantriebs,

Fig. 5  ein Flußdiagramm der erfindungsgemäßen Synchronmaschine
        in Abhängigkeit der Drehzahl bei elektrischer Erregung,

Fig. 6  ein Flußdiagramm einer erfindungsgemäßen Synchronmaschine in Abhängigkeit der Drehzahl bei Permanenterregung,

Fig. 7  Ausführungsbeispiel für eine erfindungsgemäß ausgestaltete Schenkelpolmaschine und

Fig. 8  einen schematischen Teilschnitt durch eine erfindungsgemäße Vollpolmaschine.

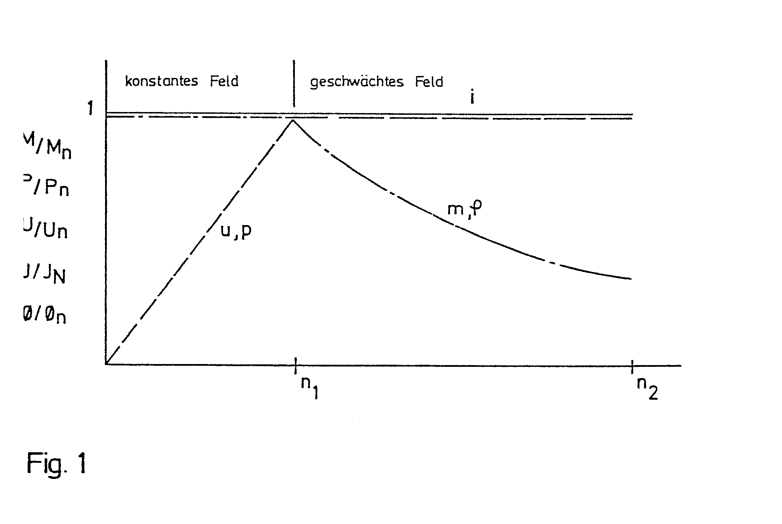

Im Drehzahlbereich zwischen 0 und $n_1$ des Flußdiagramms für eine
Gleichstrommaschine mit Feldschwächung gemäß Fig. 1 wird der
Motor mit konstantem Fluß betrieben. Bei Motornennstrom entwickelt der Motor dabei sein Nennmoment. Die Motorspannung und
die Motorleistung steigen in diesem Drehzahlbereich linear auf
die Nennwerte an.

Im Drehzahlbereich zwischen $n_1$ und $n_2$ wird dann das Feld der Maschine so verringert, daß die Motorspannung konstant bleibt. Das Moment fällt damit proportional mit $1/n$, die Leistung bleibt konstant.

Dabei ist festzustellen, daß die Baugröße des Motors durch den Betrieb im Feldschwächbereit nicht beeinflußt wird. Die Baugröße des Motors wird durch Nennstrom und Nennfluß bestimmt, also durch die Daten bei der Nenndrehzahl $n_1$. Der gleiche Motor kann somit bei konstantem Fluß bei der Drehzahl $n_2$ die Leistung $n_2/n_1$ x $P_N$ abgeben. Allerdings ist dann eine Motorspannung der Höhe $n_2/n_1$ x $U_N$ notwendig.

Dagegen ist die Baugröße des Stromrichters abhängig vom Feldschwächbereich. Bei Betrieb mit Feldschwächung ist die Stromrichterleistung gleich der Motorleistung $P_N$, ohne Feldschwächung muß die Leistung $n_2/n_1$ x $P_N$ im Stromrichter installiert werden.

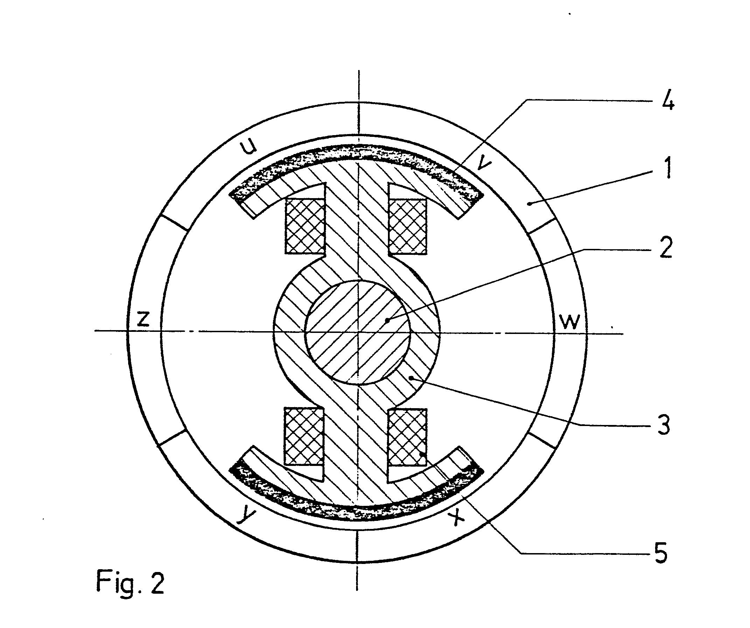

In Fig. 2 ist das Prinzip einer läufererregten Synchronmaschine mit Permanenterregung und zusätzlicher elektrischer Erregung dargestellt am Beispiel einer zweipoligen Maschine.

Im Ständer der Synchronmaschine liegt eine mehrphasige, hier beispielhaft dreiphasige, Wicklung 1. Auf der Läuferwelle 2 befestigt ist ein Nabenstern 3 aus magnetisch leitfähigem Material. Der Nabenstern ist am äußeren Durchmesser beispielhaft als Polschuh ausgebildet. Auf diesen Polschuhen sind Permanentmagnete 4 aufgebracht. Zusätzlich ist eine elektrische Erregerwicklung 5 so angebracht, daß die Achse des elektrisch erzeugten Flusses und die Achse des Flusses der Permanenterregung gleich sind.

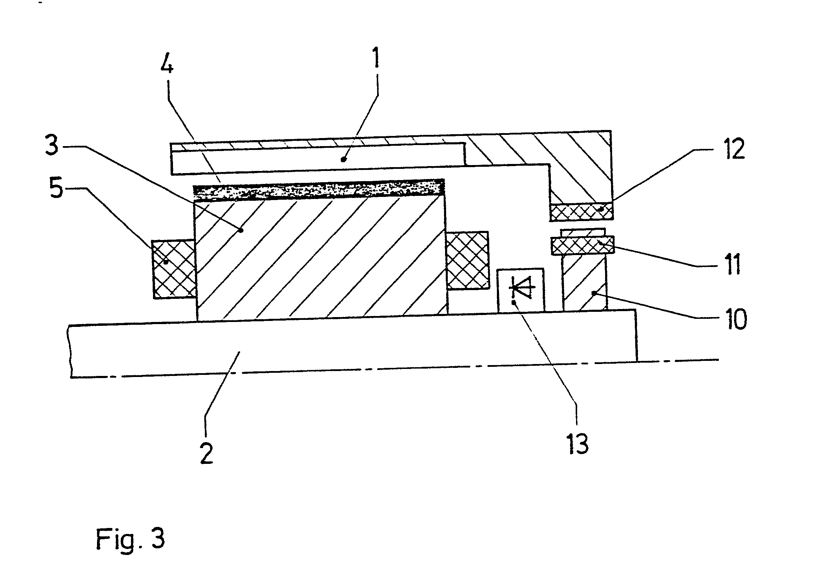

Fig. 3 zeigt einen Längsschnitt durch die erfindungsgemäße Maschine. Zusätzlich zu den Baugruppen nach Fig. 2 ist die Einrichtung zu erkennen, die die elektrische Erregung der Synchronmaschine gewährleistet.

Diese Erregereinrichtung besteht aus einem Läufer 10 mit einer mehrphasigen Wicklung 11 und einer Einrichtung 12 zur Erzeugung eines Gleichfeldes. Diese Einrichtung kann als Permanenterregung oder als elektrische Erregung ausgebildet sein. Die in der mehrphasigen Wicklung 11 des Läufers 10 induzierte Spannung wird in dem symbolhaft dargestellten Gleichrichter 13 in eine Gleichspannung umgewandelt und der elektrischen Erregereinrichtung 5 der Synchronmaschine zugeführt.

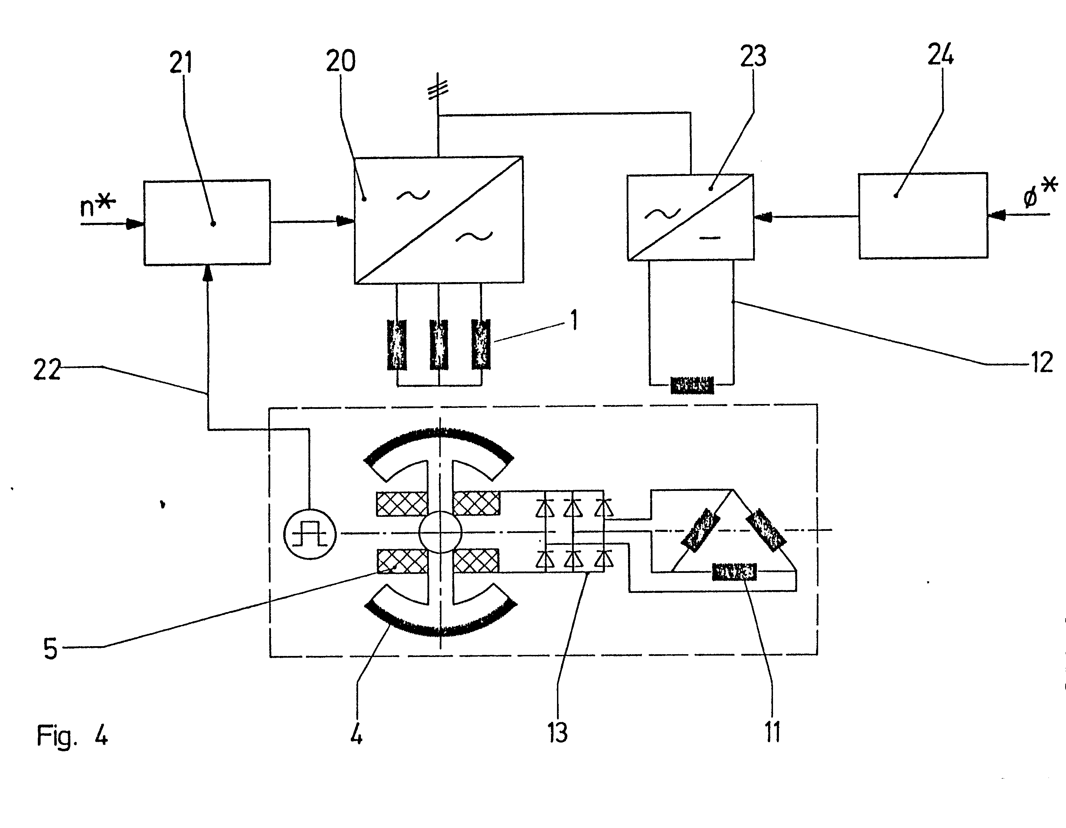

Fig. 4 zeigt schematisch das Antriebssystem, wobei die Erregereinrichtung als elektrische Erregung ausgebildet ist.
Die Ständerwicklung 1 wird von einem in der Funktionsweise bekannten selbstgeführten Stromrichter 20, vorzugsweise einem Transistor der Thyristorstromrichter, gespeist. Die Ansteuerung dieses Stromrichters geschieht in bekannter Weise von einer übergeordneten Steuerung und Regelung 21, die eine Information 22 über Drehzahl und Lage des Läufers der Synchronmaschine bekommt.

Die Erregung der Erregereinrichtung 11, 12 erfolgt über einen Stromrichter 23, der vorzugsweise als Ein- oder Zweiquadranten-Stromrichter ausgebildet ist. Die Ansteuerung dieses Stromrichters erfolgt über einen Flußregler 24. Die Vorgabe des Flußsollwertes kann aus der Klemmenspannung der Synchronmaschine oder aus der Drehzahl der Maschine abgeleitet sein.

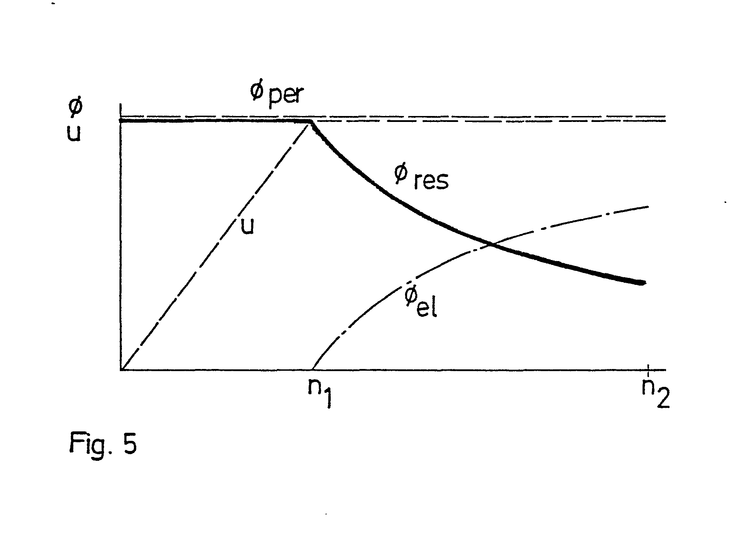

In Fig. 5 sind in Abhängigkeit der Motordrehzahl die Erregung der Synchronmaschine und deren Klemmenspannung dargestellt.
Aus dieser Figur ist die erfindungsgemäße Arbeitsweise des Antriebssystems zu erkennen.

Bis zur Drehzahl $n_1$, dem Beginn des Feldschwächbereiches ist die elektrische Erregerwicklung 12 und damit die elektrische Erregerwicklung 5 der Synchronmaschine stromlos.

In der Synchronmaschine fließt der Fluß der Permanenterregung $\emptyset_{per}$. Die Klemmenspannung der Synchronmaschine hat bei der Drehzahl $n_1$ ihren Nennwert $U_N$ erreicht. Ab der Drehzahl $n_1$ muß der Antrieb mit Feldschwächung betrieben werden, da der Stromrichter nicht in der Lage ist, höhere Spannungen bereitzustellen.

Die Stromrichtung in der elektrischen Erregereinrichtung 5 ist nun so geschaltet, daß die Flußrichtung der elektrischen Erregung $\emptyset_{el}$ entgegengesetzt der Permanenterregung $\emptyset_{per}$ ist.

Mit zunehmender Drehzahl wird daher über die Erregung der Erregerwicklung 12 der Strom in der Erregerwicklung 5 der Synchronmaschine so vergrößert, daß der resultierenden Fluß $\emptyset_{res}$ = $\emptyset_{per}$ - $\emptyset_{el}$ so abnimmt, daß die Maschinenspannung im Drehzahlbereich $n_1$ bis $n_2$ konstant bleibt.

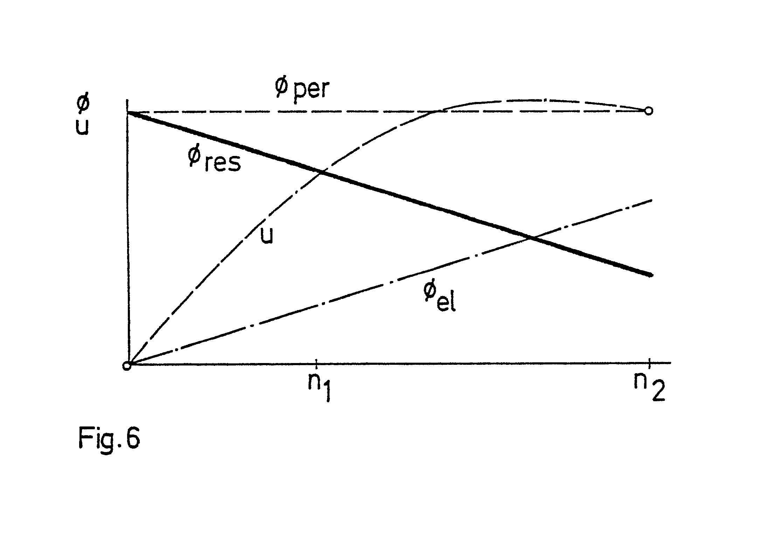

In Fig. 6 ist die Arbeitsweise des erfindungsgemäßen Antriebs dargestellt, wenn die Erregerwicklung 11, 12 als Permanenterregung ausgebildet ist. Der elektrisch erregte Fluß $\emptyset_{el}$ nimmt hierbei von Drehzahl 0 aus linear zu, im gleichen Maße mit dem resultierenden Fluß ab.

Die Maschinenspannung ist proportional $\emptyset_{res}$ x n. Vorteilhaft bei einer permanenten Erregung ist, daß kein zusätzlicher Stromrichter mit der zugehörigen Reglereinrichtung erforderlich ist.

Bei den prinzipiellen Darstellungen nach Fig. 5 und Fig. 6 sind
Sättigungseinflüsse und Spannungsabfälle an Wicklungen usw. nicht
berücksichtigt.

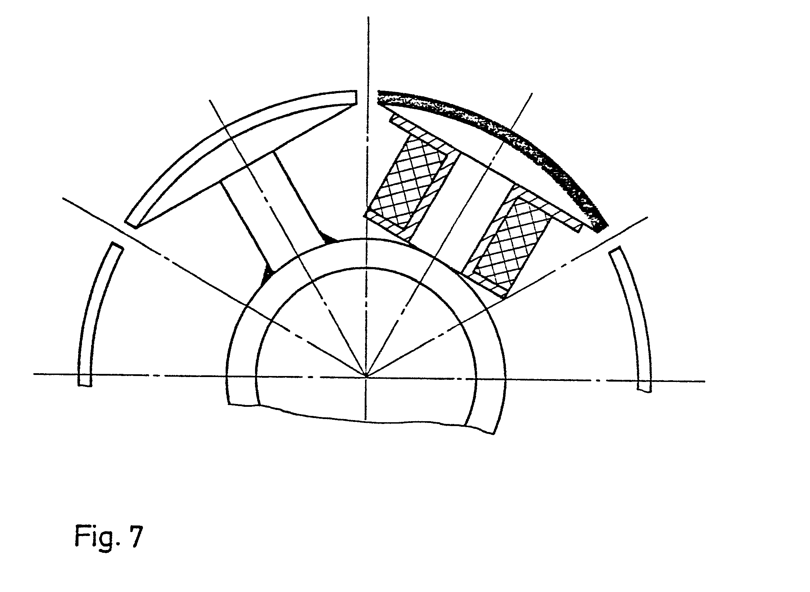

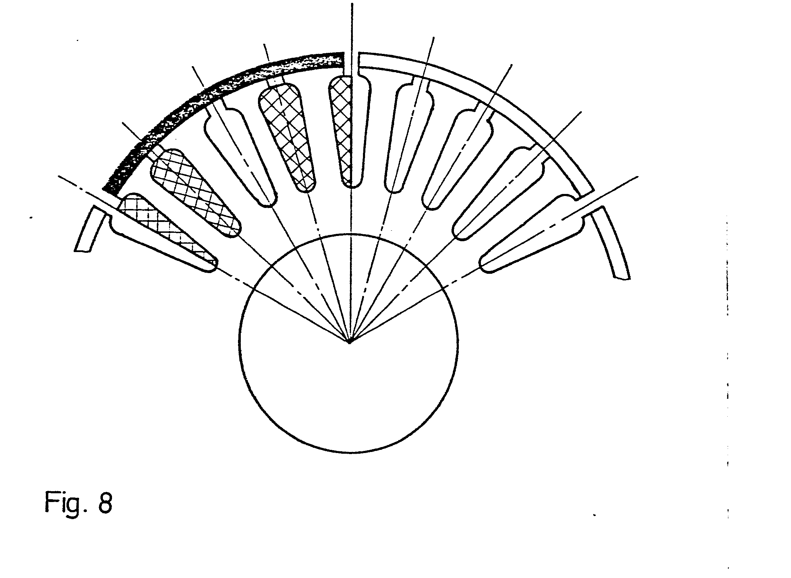

Fig. 7 zeigt beispielhaft eine mögliche Ausführungsform des Läufers in Schenkelpolausführung, Fig. 8 eine mögliche Ausführungsform eines Vollpolläufers.

Patentansprüche

1. Drehzahlgeregelte elektrische Antriebsvorrichtung mit einer stromrichtergespeisten, selbstgesteuerten, läufererregten Synchronmaschine mit Permanenterregung, gekennzeichnet durch eine parallel zur Permanenterregung (4) angeordnete, als Gegenerregung zur Permanenterregung schaltbare elektrische Erregung (5).

2. Antriebsvorrichtung nach Anspruch 1, dadurch gekennzeichnet, daß die elektrische Erregung berührungsfrei übertragen wird.

3. Antriebsvorrichtung nach Anspruch 2, dadurch gekennzeichnet, daß die elektrische Erregung erst bei Drehzahlen > 0 zugeschaltet wird.

4. Antriebsvorrichtung nach Anspruch 2 oder 3, gekennzeichnet durch eine mit Gleichstrom erregte Hilfseinrichtung (10, 11, 12, 13) zur Übertragung und Regelung der elektrischen Erregung der Synchronmaschine.

5. Antriebsvorrichtung nach Anspruch 2, gekennzeichnet durch eine permanenterregte Hilfseinrichtung (10, 11, 12, 13) zur Übertragung und Regelung der elektrischen Erregung der Synchronmaschine.

6. Antriebsvorrichtung nach einem der Ansprüche 2 bis 5, gekennzeichnet durch eine in Abhängigkeit von der Klemmenspannung des Motors oder dessen Drehzahl arbeitende Regeleinrichtung für die elektrische Erregung der Synchronmaschine.

konstantes Feld | geschwächtes Feld

$i$

1

$M/M_n$

$P/P_n$

$U/U_n$

$J/J_N$

$\emptyset/\emptyset_n$

$u,p$

$m,\emptyset$

$n_1$

$n_2$

Fig. 1

Fig. 2

Fig. 3

Fig. 4

0167158

Fig. 5

0167158

Fig.6

Fig. 7

Fig. 8